# EUROPEAN PATENT APPLICATION

(11) **EP 4 659 586 A1**
(43) Date of publication of application: **10.12.2025**
(21) Application number: 24750156.2
(22) Date of filing: 26.01.2024
(51) Int. Cl.: A23D 9/00, A47J 37/12, C09K 15/02

(54) **COMPONENT FOR SUPPRESSING COOKING OIL DEGRADATION AND METHOD FOR USE THEREOF**

(30) Priority: 01.02.2023 JP 2023014036
(71) Applicant: NSK LTD., Tokyo 141-8560 (JP)
(72) Inventor: WATANABE Yuya, Fujisawa-shi, Kanagawa 251-8501 (JP)
(74) Representative: Grünecker Patent- und Rechtsanwälte PartG mbB
(86) International application number: PCT/JP2024/002414
(87) International publication number: WO 2024/162207

(57) **Abstract**

Provided is a component for suppressing cooking oil degradation that does not comprise a special device such as a fryer having a cycle filtration mechanism and thus does not require exchange of filter papers or filters, does not require collection of solid matters produced in cooling oil such as bits of deep-fried batter and reduces the number of production processes. A component (10) for suppressing cooking oil degradation comprises: a degradation suppressing agent (1) containing at least one of an oxide and a hydroxide; and a fiber substrate for carrying the degradation suppressing agent (1), and is immersed in cooking oil when used.

## Description

### TECHNICAL FIELD

The present invention relates to an edible oil deterioration inhibiting member for inhibiting oxidative deterioration in edible oil, and a method for using the edible oil deterioration inhibiting member.

### BACKGROUND ART

Edible oil is used for various foods, but edible oil used for cooking deep-fried foods such as tempura and fries oxidatively deteriorates when the edible oil is heated during cooking or left unattended, causing a taste, an odor, and an appearance of foods to deteriorate. The viscosity of oxidatively deteriorated oil increases, leading to poor drainage. Therefore, the edible oil that has oxidatively deteriorated to a predetermined level or higher is discarded. Hence, from the viewpoint of global environment conservation, it is desired to delay the oxidative deterioration in the edible oil as much as possible to reduce the number of times the edible oil is discarded. In addition, by reducing the number of times edible oil is discarded, the number of times of cleaning a deep-frying utensil (fryer) used for deep-fried foods is reduced, and this adds the benefit that the amount of water used for cleaning can be reduced.

In order to inhibit deterioration in edible oil, for example, it is known to use a fryer apparatus provided with a circulation filtration mechanism. However, it is necessary to replace filter paper, a filter, a filter aid, and the like attached to the fryer apparatus, and it takes time and effort to perform maintenance work. Therefore, Patent Literature 1 proposes that a deterioration inhibitor for edible oil is accommodated in a net-like stainless steel container and used by being immersed in edible oil.

### CITATION LIST

### PATENT LITERATURE

Patent Literature 1: JP2000-63881A

### SUMMARY OF INVENTION

### TECHNICAL PROBLEM

However, the deterioration inhibitor described in Patent Literature 1 is obtained by mixing a calcium-containing compound powder with maifan stone powder as a main component, forming the mixture into a required shape and size by an organic binder, and firing the mixture, and therefore, a large number of manufacturing steps are required, and a large amount of carbon dioxide is discharged for firing at a high temperature.

In addition, the deterioration inhibitor is a fired product (solid), and therefore, solid matter generated in the edible oil such as fried food scraps cannot be collected, and another work such as scooping the fried food scraps using a net or the like is also required. In the case of deep-frying food, edible oil is at a high temperature, and therefore, the work of scooping the fried food scraps is dangerous.

Therefore, an object of the present invention is to provide an edible oil deterioration inhibiting member that does not use a special apparatus such as a fryer apparatus provided with a circulation filtration mechanism, thereby not requiring work of replacing filter paper or a filter, further does not require work of collecting solid matter generated in edible oil such as fried food scraps, and also requires a small number of manufacturing steps.

### SOLUTION TO PROBLEM

The above object of the present invention is achieved by the following configuration [1] related to an edible oil deterioration inhibiting member.
[1] An edible oil deterioration inhibiting member including: a deterioration inhibitor made of at least one of an oxide and a hydroxide, and a fiber base material for supporting the deterioration inhibitor.

A preferred embodiment according to the present invention related to the edible oil deterioration inhibiting member relates to following [2] to [4].
[2] The edible oil deterioration inhibiting member according to [1], in which the fiber base material contains beaten fibers.
[3] The edible oil deterioration inhibiting member according to [2], in which the fibers are natural fibers.
[4] The edible oil deterioration inhibiting member according to any one of [1] to [3], in which an amount of the deterioration inhibitor is 0.003 g to 10 g per 100 g of the edible oil.

The above object of the present invention is achieved by the following configuration [5] related to a method for using an edible oil deterioration inhibiting member.

[5] A method for using an edible oil deterioration inhibiting member, the method including immersing the edible oil deterioration inhibiting member according to any one of [1] to [4] in edible oil for use.

A preferred embodiment of the present invention related to the method for using an edible oil deterioration inhibiting member relates to the following [6].

[6] The method for using an edible oil deterioration inhibiting member according to [5], in which the edible oil deterioration inhibiting member is attached to at least one of a bottom surface and a side surface of a fryer basket.

### ADVANTAGEOUS EFFECTS OF INVENTION

The edible oil deterioration inhibiting member of the present invention can achieve a deterioration inhibiting effect simply by being immersed in edible oil. Therefore, it is not necessary to use a special apparatus such as a fryer apparatus provided with a circulation filtration mechanism, and the work of replacing a filter medium is also not required.

In addition, the cost is low because the deterioration inhibitor is also an oxide or a hydroxide, the small number of types of materials including the fiber base material is required, and a small amount of the deterioration inhibitor used is required. In addition, by using fibers obtained by beating fibers of the fiber base material, a holding force of the deterioration inhibitor is increased, and there is no problem of powder falling. Furthermore, the use of natural fibers as the fibers of the fiber base material is environmentally friendly.

The production method is also a simple, requiring only the mixing of the deterioration inhibitor and the fibers , followed by liquid removal and drying.

### BRIEF DESCRIPTION OF DRAWINGS

[FIG. 1] FIG. 1(a) is a view showing an entire edible oil deterioration inhibiting member of the present invention, and FIG. 1(b) is a schematic view showing an enlarged cross section of a part of the edible oil deterioration inhibiting member of the present invention.
[FIG. 2] FIG. 2 is a schematic view showing an example of a method for using the edible oil deterioration inhibiting member of the present invention.

### DESCRIPTION OF EMBODIMENTS

Hereinafter, an embodiment of the present invention will be described in detail with reference to the drawings. It should be noted that the present invention is not limited to the embodiments described below, and can be freely modified and implemented without departing from the gist of the present invention.

### [Edible Oil Deterioration Inhibiting Member]

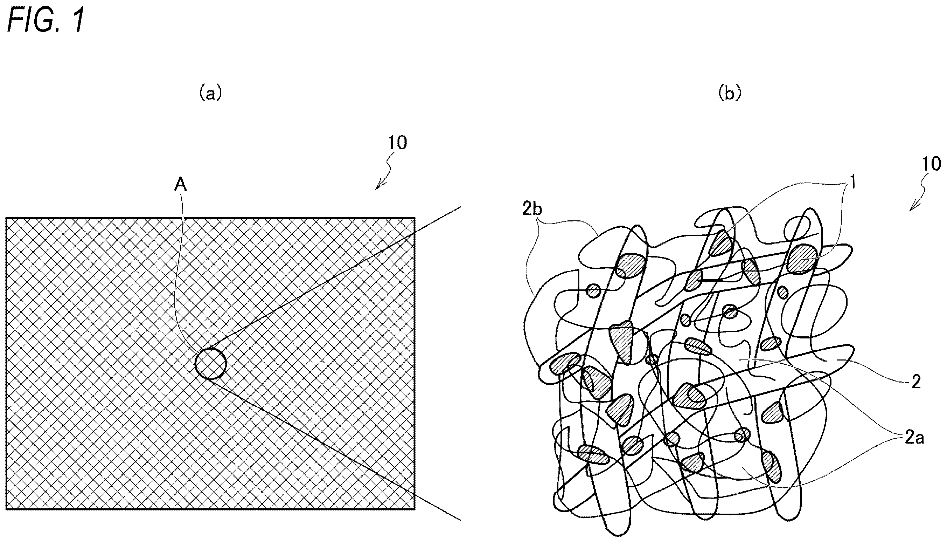

An edible oil deterioration inhibiting member 10 according to the present embodiment includes a deterioration inhibitor 1 and a fiber base material for supporting the deterioration inhibitor 1. FIG. 1(a) is a view showing the entire edible oil deterioration inhibiting member 10 of the present invention, and FIG. 1(b) is a schematic view showing an enlarged cross section of a part of the edible oil deterioration inhibiting member 10 of the present invention. As shown in FIG. 1(b), the deterioration inhibitor 1 is a powder and is held by fibers 2 of the fiber base material and fluffy portions 2b of the fibers 2, and a part of the deterioration inhibitor is exposed and held on a surface of the fiber base material. In addition, the edible oil penetrates into gaps 2a between the fiber 2 and the fluffy portion 2b and flows. Hereinafter, the deterioration inhibitor and the fiber base material that can be used in the edible oil deterioration inhibiting member 10 according to the present embodiment will be described in detail.

### [Deterioration Inhibitor]

The deterioration inhibitor 1 has a function of inhibiting deterioration in edible oil by coming into contact with the edible oil, and examples thereof include carbonates such as calcium carbonate and magnesium carbonate, silicates such as calcium silicate and magnesium silicate, tartrates such as potassium hydrogen tartrate, oxides such as magnesium oxide, calcium oxide, and aluminum oxide, hydroxides such as magnesium hydroxide and calcium hydroxide, alginates such as calcium alginate, phosphates such as trimagnesium phosphate, and the like. Each of these substances may be used alone or in combination thereof. Among these, oxides, hydroxides, and tartrates are preferable.

As shown in the production method described below, the deterioration inhibitor 1 is mixed with the fiber 2 in a solvent to prepare a suspension. The suspension is subjected to liquid removal and drying to obtain the edible oil deterioration inhibiting member 10. At this time, when water is used as a solvent for environment conservation, an oxide reacts with water to synthesize a hydroxide, and the hydroxide is present in the edible oil deterioration inhibiting member 10. For example, calcium oxide reacts with water to obtain calcium hydroxide.

### [Fiber Base Material]

The fiber base material is a fiber member for supporting the deterioration inhibitor 1, and holds the deterioration inhibitor 1 on the surface or between fibers. Therefore, it is preferable to use the beaten fiber 2 in order to increase a force of holding the deterioration inhibitor 1. The beating causes the fibers to fluff, resulting in the formation of a trunk-shaped portion and a branch-shaped portion branching off from the trunk-shaped portion. The branch-shaped portion is thinner than the trunk-shaped portion, and the branch-shaped portion is entangled with the deterioration inhibitor 1 in the liquid in a production process described below. Therefore, the deterioration inhibitor can be firmly held. Hence, the deterioration inhibitor is prevented from falling off and mixing into the edible oil during use. In order to obtain the effect of sufficiently holding the deterioration inhibitor, a diameter of the branch-shaped portion is preferably 50% or less, more preferably 40% or less, and still more preferably 30% or less of a diameter of the trunk-shaped portion.

### The term "beaten fibers" includes defibrated fibers.

In addition, the fiber base material is flexible and floats in the edible oil. Therefore, the fiber base material can entangle with the solid matter generated in the edible oil, such as fried food scraps, and can reduce the need for additional tasks, such as scooping out the fried food scraps using a net or the like.

As the fibers 2, natural fibers are preferably used. Natural fibers are preferable from the viewpoint of environmental conservation in addition to good fluffiness. The type of the natural fibers is not particularly limited, and examples thereof include wood pulp, cotton, wool fibers, hemp, silk, and the like.

In addition, natural fibers are preferably used alone as the fibers 2; but, other fibers, such as artificial fibers, synthetic resin fibers, metal fibers, glass fibers, and carbon fibers, may also be mixed with the natural fibers and used. However, in the case of using the mixture, the natural fibers are preferably used as a main component. The main component refers to a state in which the amount of the natural fibers is more than 50 mass%, preferably more than 60 mass%, and more preferably more than 70 mass% with respect to the total mass of the fibers.

Furthermore, as other fibers, artificial fibers or synthetic resin fibers are preferable. Examples of regenerated fibers include rayon and the like. Examples of the synthetic resin fibers include polyester resin fibers, polyolefin resin fibers (for example, polyethylene fibers and polypropylene fibers), polyamide resin fibers (for example, polyamide 66 fibers), vinyl resin fibers, acrylic resin fibers, polyurethane resin fibers, and the like.

The average fiber length and the average fiber diameter of these fibers are not particularly limited, but fibers having an average fiber length of 0.1 mm to 15 mm and an average fiber diameter of 0.005 mm to 0.1 mm are suitably used.

The amount of the deterioration inhibitor 1 is preferably 0.003 g to 10 g, and more preferably 0.003 g to 2 g with respect to 100 g of the edible oil used. When the amount of the deterioration inhibitor 1 is 0.003 g or more, an effect of inhibiting deterioration in the edible oil can be obtained. When the amount of the deterioration inhibitor 1 is 2 g or less, an effect of preventing the deterioration inhibitor 1 from falling off can be obtained. When the amount of the deterioration inhibitor 1 is small as described above, the raw material cost can be reduced.

Note that, as shown in Examples described below, when the amount of the deterioration inhibitor is set to 0.001 g to 0.25 g per 30 g of the edible oil (that is, 0.0033 g (about 0.003) to 0.825 g per 100 g of the edible oil), the effect of preventing the oxidative deterioration in the edible oil is particularly exhibited.

The amount of the deterioration inhibitor 1 can be calculated, for example, by washing the edible oil deterioration inhibiting member 10 with a liquid that does not dissolve the fibers 2 but dissolves the deterioration inhibitor 1 to dissolve and remove the deterioration inhibitor 1 present on the surface and inside of the fibers 2, then drying the fibers 2, and measuring the mass difference. Additionally, the mass of the deterioration inhibitor 1 can also be calculated by washing the edible oil deterioration inhibiting member 10 with a liquid that does not dissolve the deterioration inhibitor 1 but dissolves the fibers 2, to dissolve and remove the fibers 2, then drying the deterioration inhibitor 1, and measuring the mass difference. Furthermore, the amount of the deterioration inhibitor 1 can also be calculated by burning the edible oil deterioration inhibiting member 10 to burn out the fibers 2 and measuring an ash content.

### [Other Components]

The edible oil deterioration inhibiting member 10 may contain other components as necessary in addition to the deterioration inhibitor 1 and the fiber base material. For example, an adsorbent having decolorization and deodorization effects may be used. As the adsorbent, at least one selected from silicon dioxide, natural clay, artificial synthetic clay, and activated carbon is preferably used. In addition, calcium chloride may also be contained. Calcium chloride can also be added as an auxiliary agent for obtaining calcium hydroxide, which is a deterioration inhibitor, by causing a chemical reaction between calcium chloride and an alkaline aqueous solution.

### [Method for Producing Edible Oil Deterioration Inhibiting Member]

In order to produce the edible oil deterioration inhibiting member 10, first, (1) the fibers 2, preferably the beaten fibers 2, (2) the deterioration inhibitor 1, and (3) an adsorbent and the like, as necessary, are put into water and mixed to obtain an aqueous suspension.

In order to obtain the beaten fibers 2, a method is exemplified in which, when an aqueous suspension is to be obtained, the fibers 2 are put into water together with the component (2) and the component (3) and subjected to a beating treatment using a beating machine such as a refiner or a beater, or a mixing and dispersing machine such as a dissolver or a homomixer. With such beating treatment, the fibers 2 can be fluffed, and the fibers 2 can also be uniformly dispersed in the aqueous suspension.

In addition, a paper strengthening agent, a yield enhancer, a pH adjuster, a fixing agent, and the like may be added to the aqueous suspension. The addition amounts thereof are not particularly limited, as long as they do not affect the human body.

Then, the aqueous suspension is subjected to liquid removal and drying to obtain the edible oil deterioration inhibiting member 10 in which the deterioration inhibitor 1 is held on the surface of the fiber base material or between the fibers. Furthermore, the liquid may be removed by evaporating water or by filtration (papermaking).

According to the present production method, the deterioration inhibitor 1 is held by the fibers 2 without using a binder or the like. Therefore, deterioration in the edible oil can be efficiently prevented, and the edible oil deterioration inhibiting member 10 in which the deterioration inhibitor 1 is prevented from falling off can be easily produced. In addition, the amount of manufacturing labor is small, and therefore, the edible oil deterioration inhibiting member 10 is also advantageous in terms of production cost.

### [Method for Using Edible Oil Deterioration Inhibiting Member]

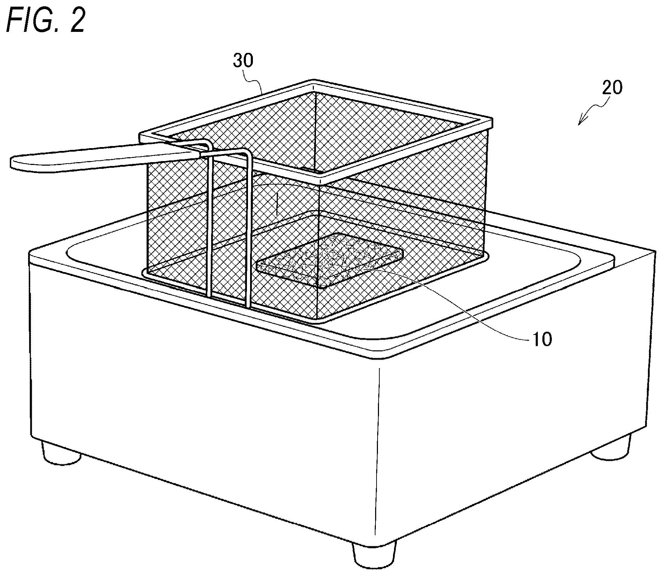

The edible oil deterioration inhibiting member 10 can be used by being immersed in the edible oil as it is during frying cooking. However, as shown in FIG. 2, the edible oil deterioration inhibiting member 10 may be laid on a bottom surface of a fryer basket 30 of a fryer apparatus 20. The solid matter generated from a food material accommodated in the fryer basket 30 during cooking can be entangled with the fiber base material of the edible oil deterioration inhibiting member 10. Additionally, when the fryer basket 30 is taken out from the edible oil, the fried food scraps floating on the oil surface can be scooped up by the fiber base material of the edible oil deterioration inhibiting member 10 at the same time.

Although not illustrated, the edible oil deterioration inhibiting member 10 may be mounted on a side surface, or both the bottom surface and the side surface, in addition to the bottom surface of the fryer basket 30. It is more efficient to entangle the solid matter from the food material with the fiber base material, and to scoop up the fried food scraps.

### EXAMPLES

Hereinafter, the present invention will be further clarified with reference to Examples and Comparative Examples.

In Examples, natural fibers as a fiber base material, calcium oxide as a deterioration inhibitor, and calcium chloride, a fixing agent, and the like as other components were put into water and sufficiently mixed to prepare an aqueous suspension. The aqueous suspension was subjected to liquid removal by filtering, and dried to produce an edible oil deterioration inhibiting member. The amount of the deterioration inhibitor was about 50 g per 1 m² of the edible oil deterioration inhibiting member. The amount of the deterioration inhibitor was determined by firing the edible oil deterioration inhibiting member to burn out natural fibers (and calcium chloride, a fixing agent, and the like) and weighing the ash content.

### (Example 1)

One test sample was prepared by cutting the produced edible oil deterioration inhibiting member into a square having a side length of 50 mm.

### (Example 2)

Two edible oil deterioration inhibiting members of Example 1 were prepared.

### (Example 3)

One test sample was prepared by cutting the produced edible oil deterioration inhibiting member into a square having a side length of 25 mm.

### (Example 4)

One test sample was prepared by cutting the produced edible oil deterioration inhibiting member into a square having a side length of 10 mm.

### (Example 5)

One test sample was prepared by cutting the produced edible oil deterioration inhibiting member into a square having a side length of 5 mm.

### (Example 6)

A total of two test samples were prepared: one test sample was obtained by cutting the produced edible oil deterioration inhibiting member into a square having a side length of 25 mm, and another test sample was from Example 3.

As described above, in Examples 1 to 6, the edible oil deterioration inhibiting members having different deterioration inhibitor amounts were used as test samples.

Furthermore, for comparison, the following were prepared.

### (Comparative Example 1)

An edible oil deterioration inhibiting member was produced in the same manner as in Examples, using natural fibers and activated carbon as an adsorbent. One test sample was prepared by cutting the produced edible oil deterioration inhibiting member into a square having a side length of 50 mm.

### (Comparative Example 2)

As a test sample, 0.3 g of a calcium oxide powder was prepared.

### (Comparative Example 3)

As a test sample, 0.3 g of potassium hydrogen tartrate powder was prepared.

### <Oxidative Deterioration Inhibiting Test>

In a petri dish having a diameter of 75 mm was put 30 g of rapeseed oil ("Nissin Canola Oil" manufactured by Nisshin Oillio Group, Ltd.) having a kinematic viscosity of about 35 mm²/s at 40°C. The test samples of Examples 1 to 6 and Comparative Examples 1 to 3 were separately immersed in the rapeseed oil. Then, the petri dish in which the test sample was immersed was allowed to stand in air atmosphere at 160°C for 50 hours, and the oxidative deterioration inhibiting performance after heating was evaluated. The evaluation was performed according to an acid value of the edible oil, and the acid value was measured by a potentiometric titration method (end point: pH 12) based on JIS K2501: 2003.

Further, for Comparative Examples, a test in which only an edible oil was put was also performed as Comparative Example 4.

The results are shown in Table 1. The oxidative deterioration inhibiting performance is shown as a relative value, with the acid value of Comparative Example 4 set to 1.

### [Table 1]

**Table 1**

| | Shape | Amount of added deterioration inhibitor (estimated) | Necessity of filteration equipment | Oxidative deterioration inhibiting performance |
|---|---|---|---|---|
| | | g | Presence/absence | After 50 hours (relative value) |
| Example 1 | 50 mm square | 0.13 | No | 0.64 |
| Example 2 | 50 mm squares, 2 test samples | 0.25 | No | 0.53 |
| Example 3 | 35 mm square | 0.06 | No | 0.67 |
| Example 4 | 10 mm square | 0.005 | No | 0.89 |
| Example 5 | 5 mm square | 0.001 | No | 0.95 |
| Example 6 | 25 mm square, 35 mm square | 0.09 | No | 0.67 |
| Comparative Example 1 | 50 mm square | - | No | 1.03 |
| Comparative Example 2 | Calcium oxide powder: 0.3 g | 0.3 | Yes | 0.71 |
| Comparative Example 3 | Potassium hydrogen tartrate powder: 0.3 g | 0.3 | Yes | 0.68 |
| Comparative Example 4 | - | - | No | 1.00 |

From the measurement results of Examples 1 to 6, it was found that when the amount of the deterioration inhibitor was set to 0.001 g to 0.25 g per 30 g of the edible oil, an effect of inhibiting the oxidative deterioration in the edible oil is achieved. That is, when the amount of the deterioration inhibitor is set to 0.0033 g (about 0.003) to 0.825 g per 100 g of the edible oil, it can be said that an effect of inhibiting the oxidative deterioration in the edible oil is achieved.

From the comparison with Comparative Example 1, it can be said that calcium oxide is effective as the deterioration inhibitor.

In addition, from the comparison with Comparative Examples 2 and 3, it can be said that it is effective to support the deterioration inhibitor by the fibers instead of using the deterioration inhibitor in a powder state. In Comparative Examples 2 and 3, the deterioration inhibitor was used in the powder state, and therefore, it was determined that a filter was necessary because the deterioration inhibitor adhered to the deep-fried food. This indicates that the deterioration inhibitor is prevented from falling off from the fibers and leaking into the oil, and the oxidative deterioration in the edible oil can be maintained for a longer time. Therefore, in order to hold the deterioration inhibitor on the fiber base material without falling, it can be said that the amount of the deterioration inhibitor is preferably 0.25 g per 30 g of the edible oil.

In addition, as for the method of use, it is only necessary to immerse the edible oil deterioration inhibiting member in the edible oil, and therefore, it is not necessary to separately prepare a filter.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, within the scope not departing from the gist of the invention, each of the configuration elements in the above embodiments may be combined in any manner.

The present application is based on a Japanese patent application (No. 2023-014036) filed on February 1, 2023, contents of which are incorporated herein by reference.

### REFERENCE SIGNS LIST

1: deterioration inhibitor
2: fiber
2a: gap
10: edible oil deterioration inhibiting member
20: fryer apparatus
30: fryer basket

## Claims

1. An edible oil deterioration inhibiting member comprising:
a deterioration inhibitor made of at least one of an oxide and a hydroxide; and
a fiber base material for supporting the deterioration inhibitor.

2. The edible oil deterioration inhibiting member according to claim 1, wherein the fiber base material contains beaten fibers.

3. The edible oil deterioration inhibiting member according to claim 2, wherein the fibers are natural fibers.

4. The edible oil deterioration inhibiting member according to any one of claims 1 to 3, wherein an amount of the deterioration inhibitor is 0.003 g to 10 g per 100 g of the edible oil.

5. A method for using an edible oil deterioration inhibiting member, the method comprising:
immersing the edible oil deterioration inhibiting member according to any one of claims 1 to 3 in edible oil for use.

6. A method for using an edible oil deterioration inhibiting member, the method comprising:
immersing the edible oil deterioration inhibiting member according to claim 4 in edible oil for use.

7. The method for using an edible oil deterioration inhibiting member according to claim 5, wherein the edible oil deterioration inhibiting member is attached to at least one of a bottom surface and a side surface of a fryer basket.

8. The method for using an edible oil deterioration inhibiting member according to claim 6, wherein the edible oil deterioration inhibiting member is attached to at least one of a bottom surface and a side surface of a flyer basket.
